# EUROPÄISCHE PATENTSCHRIFT

(11) **EP 3 090 197 B1**
(45) Veröffentlichungstag und Bekanntmachung des Hinweises auf die Patenterteilung: **25.07.2018**
(21) Anmeldenummer: 14824801.6
(22) Anmeldetag: 17.12.2014
(51) Int. Cl.: F16L 13/14, F16L 33/22

(54) **KLEMMRING, SCHIEBEHÜLSE, ANORDNUNG SOWIE VERFAHREN ZUR HERSTELLUNG EINER UNLÖSBAREN VERBINDUNG**
CLAMPING RING, SLIDING SLEEVE, ARRANGEMENT, AND METHOD FOR PRODUCING A NON-RELEASABLE CONNECTION
BAGUE DE SERRAGE, MANCHON COULISSANT, DISPOSITIF ET PROCÉDÉ DE RÉALISATION D'UN ASSEMBLAGE INDÉMONTABLE

(30) Priorität: 03.01.2014 DE 102014100028
(43) Veröffentlichungstag der Anmeldung: 09.11.2016
(73) Patentinhaber: Viega Technology GmbH & Co. KG, 57439 Attendorn (DE)
(72) Erfinder: SCHRÖDER, Klaus, 57439 Attendorn (DE); STAHLSCMIDT, Matthias, 58840 Plettenberg (DE); BOHR, Karsten, 57439 Attendorn (DE); SINOPLU, Sudi, 57439 Attendorn (DE); SCHMITT, Detlev, 57489 Drolshagen (DE)
(74) Vertreter: Cohausz & Florack
(86) Internationale Anmeldenummer: PCT/EP2014/078132
(87) Internationale Veröffentlichungsnummer: WO 2015/101495

(56) Entgegenhaltungen:
- EP-A1- 1 288 554
- CH-A5- 663 653
- DE-A1-102008 024 360
- US-A- 4 061 367

## Beschreibung

Die Erfindung betrifft eine Anordnung zur Herstellung einer unlösbaren Werkstückverbindung, mit einem Fitting, mit einem Klemmring, mit einer Schiebehülse, wobei der Fitting einen profilierten Stützkörper aufwePist, wobei der Klemmring eine Innenumfangsfläche und eine Außenumfangsfläche sowie ein proximales Ende und ein distales Ende aufweist, wobei die Innenumfangsfläche des Klemmrings zumindest abschnittsweise zylindrisch ausgebildet ist und wobei die Schiebehülse eine Innenumfangsfläche und eine Außenumfangsfläche sowie ein proximales Ende und ein distales Ende aufweist. Die Erfindung betrifft darüber hinaus ein Verfahren zur Herstellung einer unlösbaren Werkstückverbindung.

Klemmringe, Schiebehülsen, Anordnungen und Verfahren der eingangs genannten Art für unlösbare Rohrverbindungen sind aus dem Stand der Technik, beispielsweise aus dem Gasleitungs- oder Trinkwasserbereich bereits bekannt. Unter einer unlösbaren Rohrverbindung wird dabei insbesondere verstanden, dass die Verbindung nicht zum Lösen und Wiederverbinden ausgelegt ist, sich also nicht mehr oder nur noch schwierig, insbesondere nur durch Zerstörung der einzelnen Werkstücke der Rohrverbindung wieder lösen lässt. Dabei soll die Rohrverbindung möglichst einfach und sicher herzustellen sein und eine hohe Dichtigkeit für eine möglichst lange Zeit gewährleisten.

Zur Herstellung einer unlösbaren Verbindung wird zunächst ein Rohr zwischen einen Klemmring und einen Stützkörper eines Fittings angeordnet. Durch ein Aufschieben der Schiebehülse auf den Klemmring, insbesondere mittels Verpressen durch ein Presswerkzeug, wird anschließend die unlösbare Verbindung hergestellt. Das Rohr, die Schiebehülse, der Klemmring und der Fitting weisen dabei bevorzugt eine gemeinsame Achse auf. Bei einem axialen Aufschieben der Schiebehülse auf den Klemmring sind die Kontaktflächen von Schiebehülse und Klemmring gegenüber der Achse geneigt ausgestaltet, um die axiale Bewegung der Schiebehülse zumindest teilweise in eine radial einwärtig wirkende Presskraft auf den Klemmring umzuwandeln. Diese radiale Presskraft wirkt durch die Verjüngung des Klemmrings auf das Rohr und ermöglicht so ein Aufformen des Rohrs auf den Stützkörper des Fittings.

Hierbei muss insbesondere die Presskraft gleichmäßig auf die Länge des Stützkörpers wirken, um das Rohr gleichmäßig auf den Fitting aufzuformen und eine ausreichende Dichtigkeit der Verbindung zu ermöglichen, weshalb sich die schrägen Kontaktflächen annähernd über die ganze Länge des Stützkörpers erstrecken. Dadurch erhöht sich aber die Reibung zwischen der Schiebehülse und dem Klemmring während des Aufschiebens.

In der DE 10 2008 024360 A1 wird eine Rohrpresskupplung mit einer Stützhülse und einer Quetschhülse beschrieben. Die Quetschhülse weist hierbei einen Abschnitt mit einem erweiterten Durchmesser auf, welcher mit einem aufgeweiteten Rohrende verpresst werden kann.

Die CH 663 653 A5 betrifft eine Rohrpresskupplung mit einem Stutzen zum Einführen in ein Rohrende und mit einem Pressring. Bei einem Verpressen durch ein Aufschieben des Pressrings kann Material des Rohrendes in eine Ringnut am Stutzen verdrängt werden. Die EP 1 288 554 A1 offenbart eine Anordnung zur Herstellung von Rohrverbindungen, bei welcher eine schräge Kontaktfläche zwischen einem Klemmring und einer Schiebehülse vorgesehen ist.

In der US 4,061,367 A wird ein Fitting mit einem Stützkörper und einem Pressring für Rohrverbindungen. Der Fitting weist hierbei Profilierungen auf, welche mit einem konischen Abschnitt an dem Pressring zusammenwirken, um ein Rohrende zu verpressen.

Der vorliegenden Erfindung liegt daher das technische Problem zu Grunde, eine Anordnung sowie ein Verfahren zur unlösbaren Verbindung von Werkstücken anzugeben, bei dem geringere axiale Presskräfte zu hohen radialen Pressdrücken umgewandelt werden, kleine axiale Verschiebungen zum Verpressen ausreichen und eine lange Haltbarkeit der unlösbaren Verbindung gewährleistet ist.

Gemäß einer ersten Lehre der vorliegenden Erfindung wird das technische Problem betreffend eine Anordnung dadurch gelöst, dass an der Außenumfangsfläche des Klemmrings und an der Innenumfangsfläche der Schiebehülse jeweils mindestens zwei axial voneinander beabstandete Übertragungsbereiche angeordnet sind, dass jeder Übertragungsbereich des Klemmrings einem Übertragungsbereich der Schiebehülse zugeordnet ist, dass die Übertragungsbereiche von Klemmring und Schiebehülse kegelsegmentförmige Abschnitte aufweisen und dass die Übertragungsbereiche des Klemmrings und der Schiebehülse zylindrische Abschnitte aufweisen, wobei durch die Verteilung der Übertragungsbereiche bei dem axialen Aufschieben der Schiebehülse über die axiale Länge des Klemmrings abschnittsweise eine Presskraft ausgeübt werden kann und wobei die zylindrischen Abschnitte in der fertigen Verbindung die Kontaktflächen zwischen dem Klemmring und der Schiebehülse darstellen und einen radialen Pressdruck nach einem Aufschieben halten können.

Der Klemmring ist derart gestaltet, dass an der Außenumfangsfläche mindestens zwei axial voneinander beabstandete Übertragungsbereiche angeordnet sind, dass die Übertragungsbereiche kegelsegmentförmige Abschnitte aufweisen und dass die Übertragungsbereiche zylindrische Abschnitte aufweisen.

Die Schiebehülse ist derart gestaltet, dass an der Innenumfangsfläche der Schiebehülse mindestens zwei axial voneinander beabstandete Übertragungsbereiche angeordnet sind, dass die Übertragungsbereiche kegelsegmentförmige Abschnitte aufweisen und dass die Übertragungsbereiche zylindrische Abschnitte aufweisen.

Die Anordnung ist derart gestaltet, dass jeder Übertragungsbereich des Klemmrings einem Übertragungsbereich der Schiebehülse zugeordnet ist.

Durch die Anordnung von mindestens zwei axial voneinander beabstandeten Übertragungsbereichen an der Außenumfangsfläche des Klemmrings und an der Innenumfangsfläche der Schiebehülse wird ein Aufteilen der radialen Presskraft auf mehrere Übertragungsbereiche ermöglicht. Bei einem Aufschieben der Schiebehülse von außen auf den Klemmring bilden die Übertragungsbereiche die Kontaktflächen zwischen Klemmring und Schiebehülse und dienen zur Umwandlung einer axialen Bewegung eine radiale Presskraft. Da nur die Übertragungsbereiche und nicht die gesamte axiale Länge des Klemmrings zur Umwandlung benutzt werden, wird die Reibung beim Aufschieben der Schiebehülse auf den Klemmring verringert. Zudem kann der durch die Übertragungsbereiche ausgeübte radiale Pressdruck über die Ausgestaltung der Übertragungsbereiche variiert werden.

Erfindungsgemäß weisen die Übertragungsabschnitte kegelsegmentförmige Abschnitte auf, wodurch die axiale Bewegung beim Aufschieben effizient in eine radiale Presskraft umgewandelt werden kann. Die kegelsegmentförmigen Abschnitte stellen zur Achse geneigte Kontaktflächen für zwischen Klemmring und Schiebehülse dar. Durch den Kegelöffnungswinkel und die axiale Länge des kegelsegmentförmigen Abschnitts kann hierbei die durch ein Aufschieben der Schiebehülse entstehende radiale Verstellung des Klemmrings eingestellt werden. Insbesondere kann durch einen hohen Kegelöffnungswinkel mit kurzen axialen Längen des kegelsegmentförmigen Abschnitts ein hoher Pressdruck bei nur geringen axialen Presswegen bewirkt werden. Der Kegelöffnungswinkel beträgt hierbei vorzugsweise 10° bis 35°, bevorzugt 15° bis 30°, insbesondere 22°. Durch die Wahl eines solchen Kegelöffnungswinkels kann bei einem kurzen axialen Pressweg genügend radialer Pressdruck für eine unlösbare Verbindung aufgebaut werden.

Aufgrund der geringeren axialen Presskräfte können auch kostengünstigere und produktionsfreundlichere Materialien wie beispielsweise Kunststoffe zur Herstellung des Klemmrings, der Schiebehülse und des Fittings verwendet werden. Kunststoffe sind zudem oft korrosionsbeständig, womit insbesondere eine Anwendung der die Werkstückverbindung im Erdreich ermöglicht wird. Bevorzugt wird zur Herstellung von dem Klemmring, der Schiebehülse und dem Fitting glasfaserverstärktes Polyamid verwendet, möglich sind jedoch auch alle anderen für Anwendungen mit Trinkwasser oder Gas zugelassenen Kunststoffe oder deren Kombinationen. Dabei können zumindest Teile des Klemmrings, der Schiebehülse und/oder des Fittings aus Metall hergestellt sein, beispielsweise um eine ausreichende Steifigkeit des Stützkörpers beim Verpressen zu ermöglichen. Bevorzugt werden dabei für Anwendungen mit Trinkwasser zugelassene Metalle verwendet, wie beispielsweise Rotguss, Messinge oder auch Edelstähle.

Es hat sich herausgestellt, dass für die Dichtigkeit der Werkstückverbindung keine weiteren Dichtmittel, beispielsweise in Form von O-Ringen oder Schichten aus Elastomeren, benötigt werden. Damit wird zusätzlicher Produktionsaufwand bei der Herstellung der Anordnung vermieden und die Haltbarkeit der Werkstückverbindung erhöht.

Die kegelsegmentförmigen Abschnitte können insbesondere als Gleitflächen ausgebildet sein. Dafür können die Oberflächen der kegelsegmentförmigen Abschnitte besonders glatt gestaltet sein oder auch aus einem Material bestehen, welches in den Klemmring und die Schiebehülse eingearbeitet wird und ein Gleiten ermöglicht beziehungsweise erleichtert. Zudem können gleitfördernde Mittel auf die Oberflächen der kegelsegmentförmigen Abschnitte gebracht werden.

In einer bevorzugten Ausführung der vorliegenden Erfindung sind die kegelsegmentförmigen Abschnitte derart ausgestaltet, dass mehrere kegelsegmentförmige Abschnitte den gleichen Kegelöffnungswinkel und die gleiche axiale Länge aufweisen, wodurch an mehreren Übertragungsbereichen die gleiche radiale Verstellung nach einem Verpressen gelingt. Insbesondere können alle kegelsegmentförmigen Abschnitte den gleichen Kegelöffnungswinkel und die gleiche axiale Länge aufweisen. In einer besonders bevorzugten Ausgestaltung der Erfindung sind die Übertragungsbereiche des Klemmrings zudem gleichmäßig über die axiale Länge des Klemmrings verteilt, womit trotz der axialen Abstände zwischen den Übertragungsbereichen ein annäherungsweise gleichmäßiger Pressdruck über die axiale Länge des Klemmrings entsteht.

Die bei einem Aufschieben der Schiebehülse entstehende radiale Verstellung des Klemmrings kann aber auch an den einzelnen Übertragungsbereichen unterschiedlich gewählt werden. Der entstehende Pressdruck kann insbesondere an die Eigenschaften eines zu verpressenden Rohrs angepasst werden. Beispielsweise kann die radiale Verstellung an einem am distalen Ende des Klemmrings befindlichen Übertragungsbereich größer gestaltet sein, um dort eine höhere Dichtigkeit der Verbindung zu bewirken oder um einer größeren Steifigkeit eines Werkstücks am distalen Ende zu begegnen.

Weiterhin weisen die Übertragungsbereiche erfindungsgemäß zylindrische Abschnitte auf. Die zylindrischen Abschnitte stellen hierbei Kontaktflächen zwischen dem Klemmring und der Schiebehülse dar, welche den radialen Pressdruck in der fertigen Verbindung nach einem Aufschieben halten und die Unlösbarkeit und Dichtigkeit bewirken. Hierbei kann über die axiale Länge der zylindrischen Abschnitte und deren Durchmesser der Pressdruck der einzelnen Übertragungsbereiche je nach Zweck wie oben beschrieben als unterschiedlich oder zumindest teilweise gleich eingestellt werden.

In einer bevorzugten Ausgestaltung der vorliegenden Erfindung nimmt der jeweilige Durchmesser der einzelnen zylindrischen Abschnitte vom distalen zum proximalen Ende zu. Auf diese Weise erlaubt die Geometrie des Klemmrings ein einfaches Anordnen der Schiebehülse außen auf den Klemmring, indem die Schiebehülse vor dem eigentlichen Aufschieben zum Verpressen vom distalen Ende in Richtung des proximalen Endes auf den Klemmring gebracht wird. Mit der Zunahme der Durchmesser der einzelnen zylindrischen Abschnitte vom distalen zum proximalen Ende nimmt umgekehrt der Klemmring eine sich zum distalen Ende verjüngende Form an. Dies ist so zu verstehen, dass sich eine gedachte Verbindungslinie der Durchmesser der einzelnen zylindrischen Abschnitte vom proximalen Ende zum distalen Ende hin verjüngt.

In einer vorteilhaften Ausgestaltung weist die Außenumfangsfläche des Klemmrings mindestens eine Haltevertiefung auf, der ein an der Innenumfangsfläche der Schiebehülse befindlicher Haltevorsprung zugeordnet ist. Nach dem Anordnen der Schiebehülse auf dem Klemmring greift der Haltevorsprung radial einwärts in die Haltevertiefung und fixiert die Schiebehülse temporär auf dem Klemmring.

Gemäß einer vorteilhaften Ausgestaltung der Erfindung sind die kegelsegmentförmigen Abschnitte ringförmig umlaufend ausgebildet. Auf diese Weise wird der von den Übertragungsabschnitten während des Aufschiebens ausgeübte Pressdruck entlang des Umfangs gleichmäßig verteilt. Es können auch mehrere kegelsegmentförmige Abschnitte auf einer ringförmig umlaufenden Trajektorie angeordnet sein.

Bevorzugt ist eine Anordnung der kegelsegmentförmigen Abschnitte in regelmäßigen axialen Abständen, wodurch der Pressdruck annähernd gleichmäßig entlang der axialen Länge des Klemmrings verteilt wird.

In einer weiteren vorteilhaften Ausgestaltung der vorliegenden Erfindung weist der Klemmring zumindest über einen Teil der Länge in axialer Richtung einen Schlitz auf. Dies vermindert die für eine radiale Umformung des Klemmringes benötigten Kräfte. Insbesondere bei schwierig umformbaren Materialen für den Klemmring wie beispielsweise Kunststoff ermöglicht der Schlitz eine zuverlässige unlösbare radiale Verpressung. Jedoch ist auch für leicht umformbare Materialien der Schlitz im Klemmring vorteilhaft für die Verpressung. Bevorzugt ist ein sich über die gesamte axiale Länge erstreckender Schlitz, um eine annähernd über die Länge gleichmäßige Verpressung zu ermöglichen.

Gemäß einer weiteren Lehre der vorliegenden Erfindung wird das technische Problem auch durch ein Verfahren zur Herstellung einer unlösbaren Werkstückverbindung zwischen einem Fitting, einem Rohr, einem Klemmring und einer Schiebehülse, wobei der Fitting einen profilierten Stützkörper aufweist und wobei der Klemmring auf dem Fitting angeordnet ist, gelöst, bei dem das Rohr zwischen den Klemmring und den Stützkörper des Fittings eingeführt wird, bei dem an der Außenumfangsfläche des Klemmrings und an der Innenumfangsfläche der Schiebehülse jeweils mindestens zwei einander zugeordnete, axial voneinander beabstandete Übertragungsbereiche mit kegelsegmentförmigen Abschnitten und mit zylindrischen Abschnitten in Kontakt gebracht werden und bei dem bei einem axialen Aufschieben der Schiebehülse auf den Klemmring durch die Übertragungsbereiche ein radial einwärts gerichteter Pressdruck auf das Rohr gegen den Stützkörper ausgeübt wird, wobei durch die Verteilung der Übertragungsbereiche bei dem axialen Aufschieben der Schiebehülse über die axiale Länge des Klemmrings abschnittsweise eine Presskraft ausgeübt wird, und wobei die zylindrischen Abschnitte in der fertigen Verbindung die Kontaktflächen zwischen dem Klemmring und der Schiebehülse darstellen und einen radialen Pressdruck nach einem Aufschieben halten.

Zur Bewirkung der axialen Bewegung kann die Außenumfangsfläche der Schiebehülse verschiedene Ausgestaltungen annehmen. Beispielsweise kann am einem der beiden Enden der Schiebehülse ein Flansch angeordnet sein, der einem axialen Presswerkzeug als Ansatzfläche dient. Ebenso kann eine gegen die Achse geneigte Fläche, beispielsweise eine kegelsegmentförmige Fläche, als Ansatzfläche und insbesondere Gleitfläche für ein Radialwerkzeug ausgebildet sein, womit das Umwandeln einer radial einwärtigen Bewegung in ein axiales Verschieben ermöglicht wird. Die vorliegende Erfindung ist jedoch nicht auf solche Presswerkzeuge beschränkt. Weitere Ausgestaltungen der Außenumfangsfläche der Schiebehülse sind je nach der Form der verwendeten Werkzeuge denkbar.

Erfindungsgemäß ist die Schiebehülse vor dem Aufschieben auf dem Klemmring angeordnet. Dies kann beispielsweise durch die Kombination einer Haltevertiefung mit einem Haltevorsprung bewirkt werden, welche die Schiebehülse temporär auf dem Klemmring fixiert. Der Klemmring ist dabei erfindungsgemäß auf dem Fitting angeordnet. Insbesondere weist die Innenumfangsfläche des Klemmrings einen radial einwärts greifenden Rastvorsprung auf, dem eine Rastvertiefung an dem Grundkörper des Fittings zugeordnet ist. Vor der Verpressung greift der Rastvorsprung bereits in die Rastvertiefung ein und fixiert somit den Klemmring temporär auf dem Fitting. Zusätzlich kann die Innenumfangsfläche des Klemmrings eine Positionierhilfe aufweisen, welche den Klemmring koaxial auf dem Stützkörper positioniert. Auf diese Weise kann der Benutzer des erfindungsgemäßen Verfahrens den Fitting, den Klemmring und die Schiebehülse vor dem eigentlichen Verpressen zu einer Anordnung kombinieren und sich auf die Verbindung zwischen dieser Anordnung und dem Rohr konzentrieren.

Das zu verpressende Rohr wird erfindungsgemäß zwischen Fitting und Klemmhülse eingeführt. Das Rohr liegt nach dem Einführen zwischen dem Profil des Stützkörpers und der Innenumfangsfläche des Klemmringes. Insbesondere ist hierbei am Stützkörper des Fittings ein Flansch als Anschlag zum Kontakt mit dem Rohrende vorgesehen. Insbesondere kann beim Einführen des Rohrs die am Klemmring angeordnete Positionierhilfe das Rohrende berühren und dadurch der Klemmring axial in Richtung des proximalen Endes geschoben werden, womit der Klemmring in die zum Verpressen optimale Position auf dem Fitting gebracht wird.

Erfindungsgemäß werden die Übertragungsbereiche von Schiebehülse und Klemmring mit den kegelsegmentförmigen Abschnitten miteinander in Kontakt gebracht. Hierbei ist es möglich, dass nur einzelne oder auch mehrere der Übertragungsbereiche gleichzeitig in Kontakt kommen. Dies kann durch eine entsprechende Wahl der Abstände der Übertragungsbereiche an dem Klemmring und an der Schiebehülse bewirkt werden. Beispielsweise kann zuerst eine radiale Verpressung durch Übertragungsbereiche nahe dem distalen Ende beabsichtigt sein. Bevorzugt ist jedoch ein gleichzeitiger Kontakt aller Übertragungsbereiche zum Zweck einer gleichzeitigen Verpressung, was durch im Wesentlichen gleiche Abstände zwischen den zugeordneten Übertragungsbereichen bewirkt wird.

Erfindungsgemäß wird bei dem axialen Aufschieben der Schiebehülse auf den Klemmring durch die Übertragungsbereiche ein radial einwärts gerichteter Pressdruck auf das Rohr gegen den Stützkörper ausgeübt. Dies wird insbesondere über ein Gleiten der oben beschriebenen kegelförmigen Abschnitte der zugeordneten Übertragungsbereiche von Klemmring und Schiebhülse bewirkt. Durch die Verteilung der Übertragungsbereiche über die axiale Länge des Klemmrings wird abschnittsweise eine Presskraft auf das Rohr ausgeübt. Es hat sich herausgestellt, dass schon wenige Übertragungsabschnitte ausreichen, um trotzdem eine gleichmäßige Verpressung des Rohres und ein gleichmäßiges Aufformen des Rohres auf das Profil des Stützkörpers zu ermöglichen und damit eine unlösbare und dichte Verbindung herzustellen. Insbesondere reichen drei Übertragungsabschnitte bei vielen Rohrarten und Rohrmaterialien aus. Der Kegelöffnungswinkel kann bei einer kleinen Anzahl von Übertragungsabschnitten entsprechend steil gewählt werden, womit der axiale Pressweg verkürzt wird.

In einer vorteilhaften Ausgestaltung der Erfindung weist die Innenumfangsfläche des Klemmrings einen radial einwärts greifenden Rastvorsprung auf, der zur temporären Fixierung des Klemmrings auf dem Fitting in eine Rastvertiefung am Grundkörper des Fittings ragt. Durch das radiale Verpressen des Klemmrings wird der Rastvorsprung weiter radial in die Rastvertiefung geschoben. Nach erfolgter Verpressung sichert die Kombination aus Rastvorsprung und Rastvertiefung weiterhin den Klemmring gegen ein Lösen von dem Fitting.

In einer weiteren vorteilhaften Ausgestaltung der Erfindung ist am proximalen Ende der Schiebehülse und am Grundkörper des Fittings jeweils ein Mittel zur Fixierung angeordnet. Nach erfolgtem Aufschieben der Schiebehülse werden die Mittel zur Fixierung miteinander verbunden und ein Lösen der Schiebehülse von dem Fitting verhindert. Die Mittel zu Fixierung können beispielsweise zwei ineinander greifende und einrastende Haken sein. Eine Bohrung und ein Gewinde für eine Schraubverbindung oder auch weitere Verbindungen sind möglich.

Im Folgenden wird die Erfindung anhand von einem in einer Zeichnung dargestellten Ausführungsbeispiel näher erläutert. In der Zeichnung zeigen:
- Fig. 1: ein Ausführungsbeispiel eines Klemmrings in Seitenansicht in einer ersten Schnittdarstellung,
- Fig. 2: der Klemmring aus Fig. 1 in einer zweiten Schnittdarstellung,
- Fig. 3: der Klemmring aus Fig. 1 und 2 in perspektivischer Ansicht,
- Fig. 4: ein Ausführungsbeispiel einer Schiebehülse in Seitenansicht in einer ersten Schnittdarstellung,
- Fig. 5: die Schiebehülse aus Fig. 4 in einer zweiten Schnittdarstellung,
- Fig. 6: die Schiebehülse aus Fig. 4 und 5 in perspektivischer Ansicht,
- Fig. 7: ein Ausführungsbeispiel eines Fittings in Seitenansicht in einer Schnittdarstellung,
- Fig. 8: der Fitting aus Fig. 7 in perspektivischer Ansicht,
- Fig. 9: eine Anordnung aus dem Klemmring, der Schiebehülse und des Fittings aus den vorherigen Figuren im unverpressten Zustand in Seitenansicht in einer ersten Schnittdarstellung,
- Fig. 10: die Anordnung aus Fig. 9 in einer zweiten Schnittdarstellung,
- Fig. 11: die Anordung aus Fig. 9 und 10 im verpressten Zustand in der gleichen Ansicht wie Fig. 9,
- Fig. 12: die Anordnung aus Fig. 9-11 im verpressten Zustand in der gleichen Ansicht wie Fig. 10.

Nicht alle Merkmale des Ausführungsbeispiels sind durchgehend ringförmig umlaufend ausgebildet. Zur Klarheit sind deshalb in den Figuren mehrere Schnittdarstellungen von dem Klemmring, der Schiebehülse und der Anordnung gezeigt.

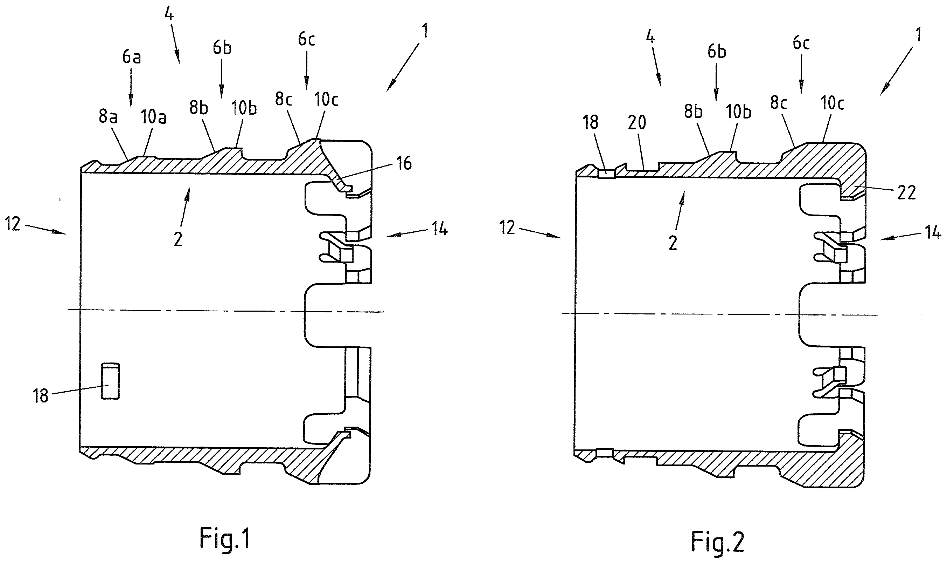

Fig. 1 zeigt ein Ausführungsbeispiel eines Klemmrings 1 in Seitenansicht in einer ersten Schnittdarstellung. Die Innenumfangsfläche 2 des Klemmrings 1 ist im Wesentlichen zylindrisch ausgestaltet. An der Außenumfangsfläche 4 des Klemmrings 1 sind drei Übertragungsbereiche 6a, 6b, 6c angeordnet, welche kegelsegmentförmige Abschnitte 8a, 8b, 8c sowie zylindrische Abschnitte 10a, 10b, 10c aufweisen. Die kegelsegmentförmigen Abschnitte 8a, 8b, 8c sind hierbei mit annähernd gleichen Kegelöffnungswinkeln und annähernd gleichen axialen Längen ausgebildet. Der jeweilige Durchmesser der zylindrischen Abschnitte 10a, 10b, 10c nimmt vom distalen Ende 12 zum proximalen Ende 14 zu. Am proximalen Ende 14 ist eine Positionierhilfe 16 angeordnet.

In Fig. 2 ist eine zweite Schnittdarstellung des Klemmrings 1 aus Fig. 1 gezeigt. Die Haltevertiefung 18 ist an der Außenumfangsfläche 4 nahe dem distalen Ende 12 angeordnet. Die Haltevertiefung 18 ist als bis zur Innenumfangsfläche 2 durchgehende Ausnehmung ausgebildet. In Richtung des proximalen Endes 14 befindet sich neben der Haltevertiefung 18 eine Rastvertiefung 20. Am proximalen Ende 14 ist an der Innenumfangsfläche 6 ein Rastvorsprung 22 angeordnet.

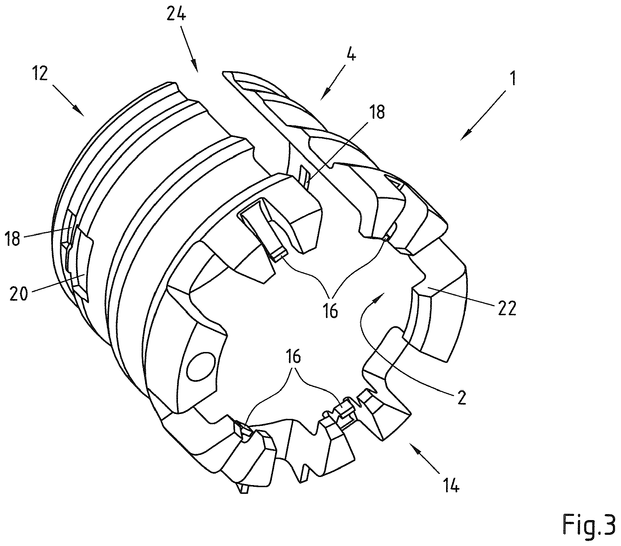

Fig. 3 zeigt den Klemmring 1 aus Fig. 1 und 2 in perspektivischer Ansicht. Der Klemmring 1 weist in axialer Richtung einen Schlitz 24 auf. Der Schlitz 24 erstreckt sich über die volle axiale Länge des Klemmrings 1.

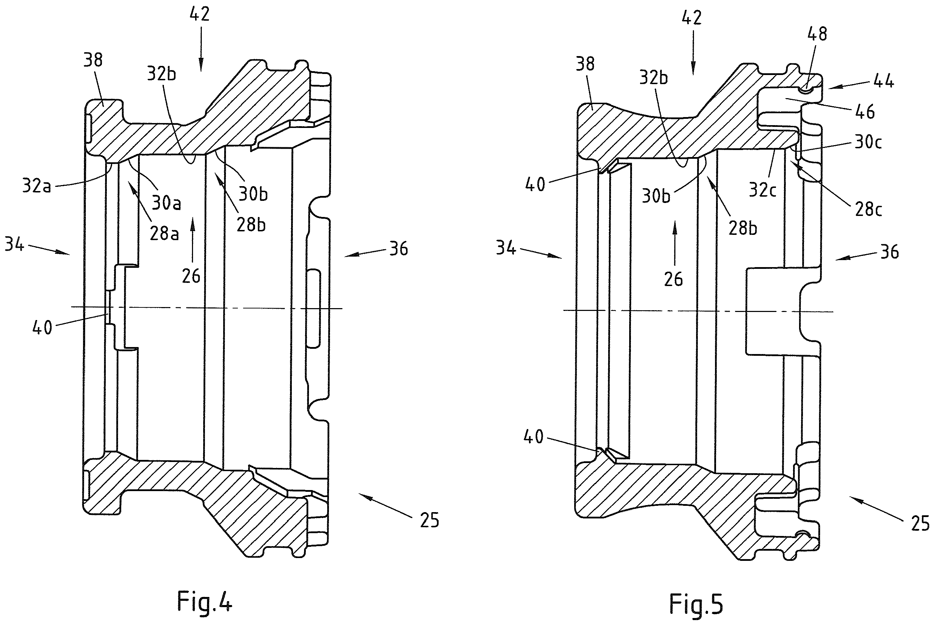

Fig. 4 zeigt ein Ausführungsbeispiel einer Schiebehülse 25 in Seitenansicht in einer ersten Schnittdarstellung. An der Innenumfangsfläche 26 der Schiebehülse 25 sind drei Übertragungsbereiche 28a, 28b, 28c angeordnet. Die Übertragungsbereiche 28a, 28b, 28c weisen kegelsegmentförmige Abschnitte 30a, 30b, 30c und zylindrische Abschnitte 32a, 32b, 32c auf. Die kegelsegmentförmigen Abschnitte 30a, 30b, 30c sind hierbei mit annähernd gleichen Kegelöffnungswinkeln und annähernd gleichen axialen Längen vorgesehen. Der jeweilige Durchmesser der zylindrischen Abschnitte 32a, 32b, 32c nimmt vom distalen Ende 34 zum proximalen Ende 36 zu. Am distalen Ende 34 ist ein Flansch 38 als Ansatzfläche für ein hier nicht gezeigtes Axialpresswerkzeug vorgesehen.

In Fig. 5 ist eine zweite Schnittdarstellung der Schiebehülse 25 aus Fig. 4 gezeigt. An der Innenumfangsfläche 26 ist in der Nähe des distalen Endes 34 ein Haltevorsprung 40 angeordnet. Am proximalen Ende 36 nahe der Außenumfangsfläche 42 ist ein Mittel zur Fixierung 44 vorgesehen. Das Mittel zur Fixierung 44 umfasst eine Ausnehmung 46 mit einem an einer Fläche befindlichen Wulst 48.

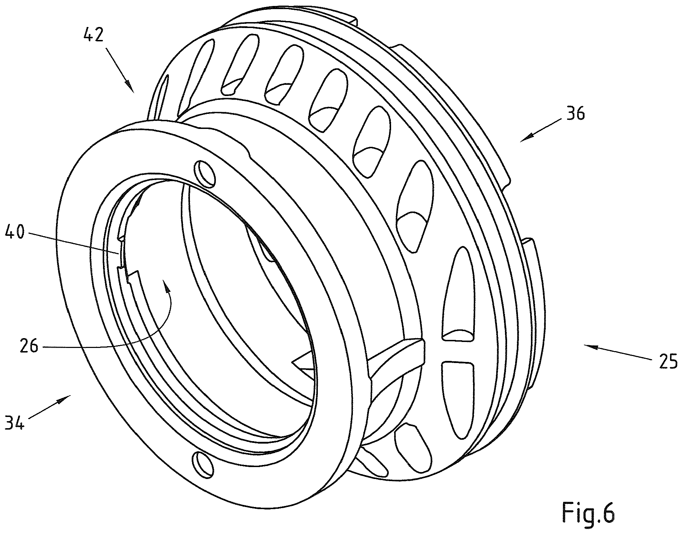

Fig. 6 zeigt die Schiebehülse 25 aus Fig. 4 und 5 in perspektivischer Ansicht.

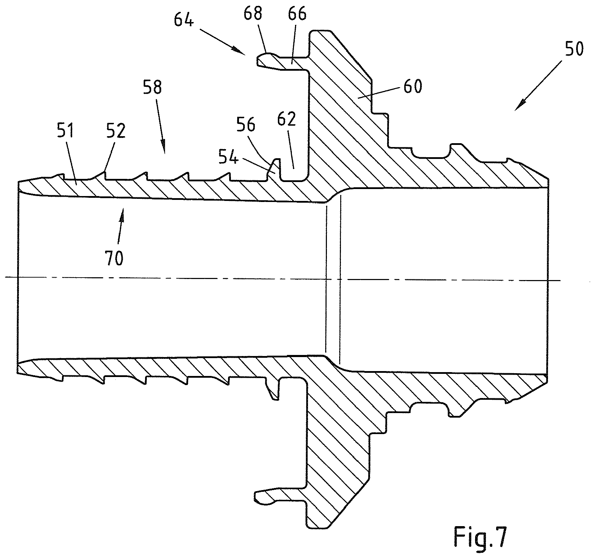

In Fig. 7 ist ein Ausführungsbeispiel eines Fittings 50 in Seitenansicht in einer Schnittdarstellung gezeigt. Der Stützkörper 51 des Fittings 50 weist eine Profilierung 52 sowie einen Flansch 54 mit einer kegelsegmentförmigen Fläche 56 an der Außenumfangsfläche 58 auf. Der Flansch 54 bildet zusammen mit dem Grundkörper 60 eine Rastvertiefung 62.

Am Grundkörper 60 ist ein Mittel zur Fixierung 64 angeordnet. Das Mittel zur Fixierung 64 besteht aus einer Lasche 66 mit einem Wulst 68. Die Innenumfangsfläche 70 des Stützkörpers 51 ist im Wesentlichen zylindrisch vorgesehen.

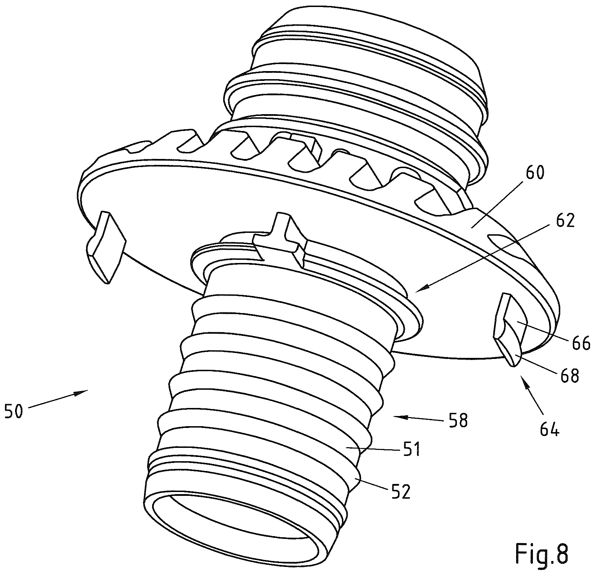

Fig. 8 zeigt den Fitting 50 aus Fig. 7 in perspektivischer Ansicht.

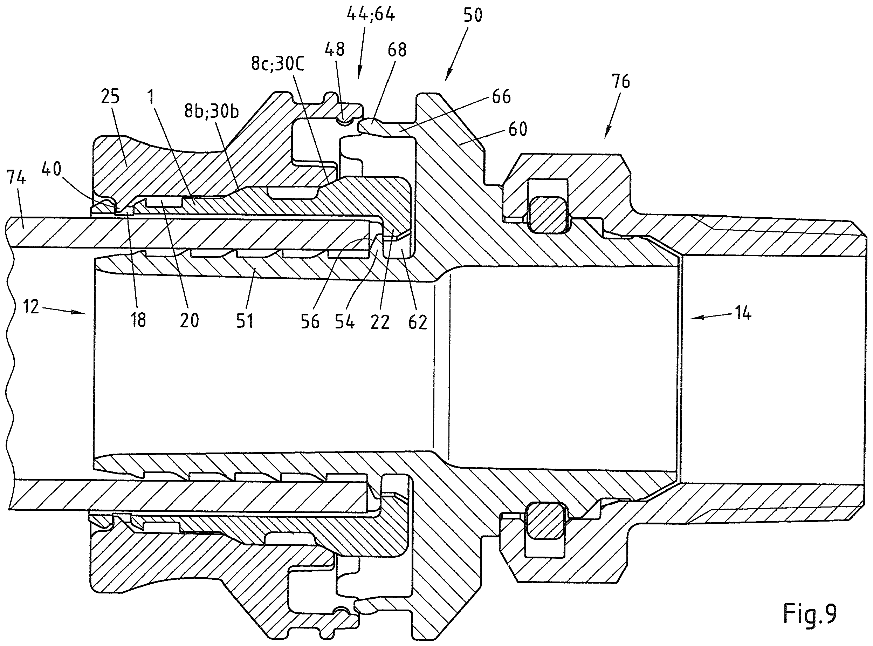

Fig. 9 zeigt eine Anordnung aus dem Klemmring 1, der Schiebehülse 25 und des Fittings 50 aus den vorherigen Figuren im unverpressten Zustand in Seitenansicht in einer ersten Schnittdarstellung. Die Schnittebene ist hierbei für den Klemmring 1 analog zu Fig.2 und für die Schiebehülse 25 analog zu Fig. 5 gewählt. Der Klemmring 1 ist auf den Stützkörper 51 des Fittings 50 geschoben. Die kegelsegmentförmige Fläche 56 des Flansches 54 erleichtert das Einschieben des Rastvorsprungs 22 in die Rastvertiefung 62. Der Rastvorsprung 22 greift radial einwärts in die Rastvertiefung 62 und fixiert den Klemmring 1 temporär auf dem Fitting 50.

Die Schiebehülse 25 ist außen auf den Klemmring 1 geschoben. Der Haltevorsprung 40 greift radial einwärts in die Haltevertiefung 18 und fixiert die Schiebehülse 25 temporär auf dem Klemmring 1. Im in Fig. 9 gezeigten unverpressten Zustand stehen die kegelsegmentförmigen Abschnitte 8a, 8b, 8c; 30a, 30b, 30c von Klemmring 1 und Schiebehülse 25 in Kontakt.

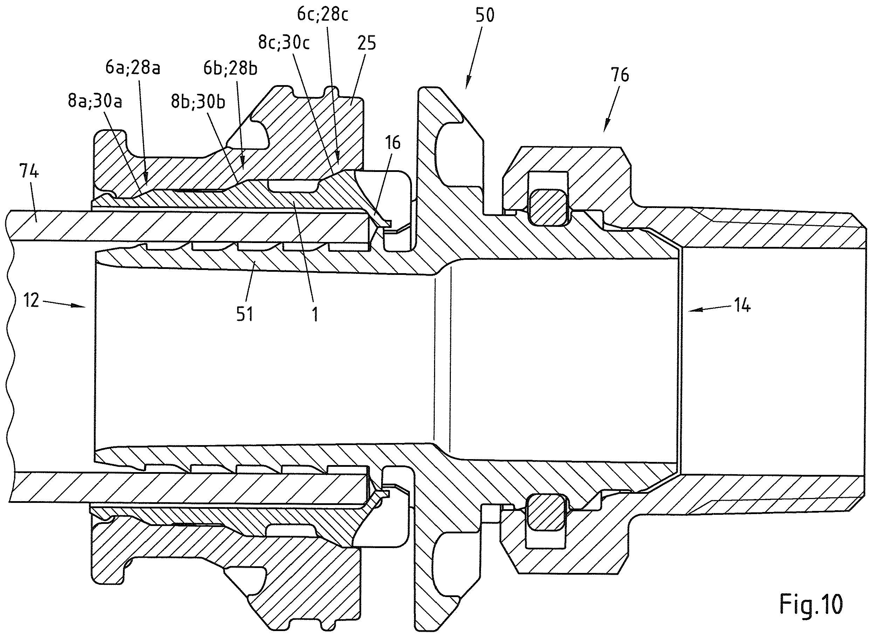

Fig. 10 zeigt die Anordnung aus Fig. 9 in einer zweiten Schnittdarstellung, wobei die Schnittebene für den Klemmring 1 analog zu Fig. 1 und für die Schiebehülse 25 analog zu Fig. 4 gewählt ist. Die an der Innenumfangsfläche 2 des Klemmrings 1 angeordnete Positionierhilfe 16 ist im Kontakt mit dem Flansch 54 am Stützkörper 51 des Fittings 50 und stellt eine koaxiale Anordnung von Klemmring 1 und Fitting 50 sicher. Bei dem Einführen eines Rohrs 74 zwischen Klemmring 1 und Fitting 50 wird das Rohr 74 gegen den Flansch 54 geschoben.

Nach dem Einführen des Rohrs 74 zwischen Klemmring 1 und Fitting 50 kann das Verpressen erfolgen. Mit einem Presswerkzeug wird die Schiebehülse 25 in Richtung des proximalen Endes 14 auf den Klemmring 1 geschoben. Die in Kontakt stehenden kegelsegmentförmigen Abschnitte 8a, 8b, 8c; 30a, 30b, 30c weisen den gleichen Kegelöffnungswinkel auf und bilden somit während des Aufschiebens Gleitflächen zwischen dem Klemmring 1 und der Schiebehülse 25. Durch die kegelsegmentförmigen Abschnitte 8a, 8b, 8c; 30a, 30b, 30c wird die axiale Bewegung der Schiebehülse 25 teilweise in eine auf den Klemmring 1 wirkende radial einwärtige Presskraft umgewandelt. Hierbei kann durch einen hohen Kegelöffnungswinkel und kurze axiale Längen der kegelsegmentförmigen Abschnitte 8a, 8b, 8c; 30a, 30b, 30c ein hoher Pressdruck bei nur geringem axialen Pressweg bewirkt werden. Aufgrund der gleichen axialen Abstände der Übertragungsbereiche 6a, 6b, 6c; 28a, 28b 28c sowie gleichen Kegelöffnungswinkeln und gleichen axialen Längen der kegelsegmentförmigen Abschnitte 8a, 8b, 8c; 30a, 30b, 30c von Klemmring 1 und Schiebehülse 25 erfolgt die Verpressung gleichzeitig und gleichmäßig an allen Übertragungsbereichen 6a, 6b, 6c; 28a, 28b 28c. Der Klemmring 1 verjüngt sich und überträgt dabei die radial einwärts wirkende Presskraft auf das Rohr 74. Dadurch wird das Rohr 74 in den profilierten Stützkörper 51 des Fittings 50 aufgeformt und eine unlösbare und dichte Rohrverbindung hergestellt.

Rohrendseitig ist am Grundkörper 60 des Fittings 50 ein Anschluss 76 angeordnet. Dabei kann es sich beispielsweise um eine Schraubverbindung zur Aufnahme weiterer Werkstücke handeln. Ein symmetrischer Aufbau des Fittings 50 zur Verbindung zweier Rohre ist beispielsweise ebenso möglich.

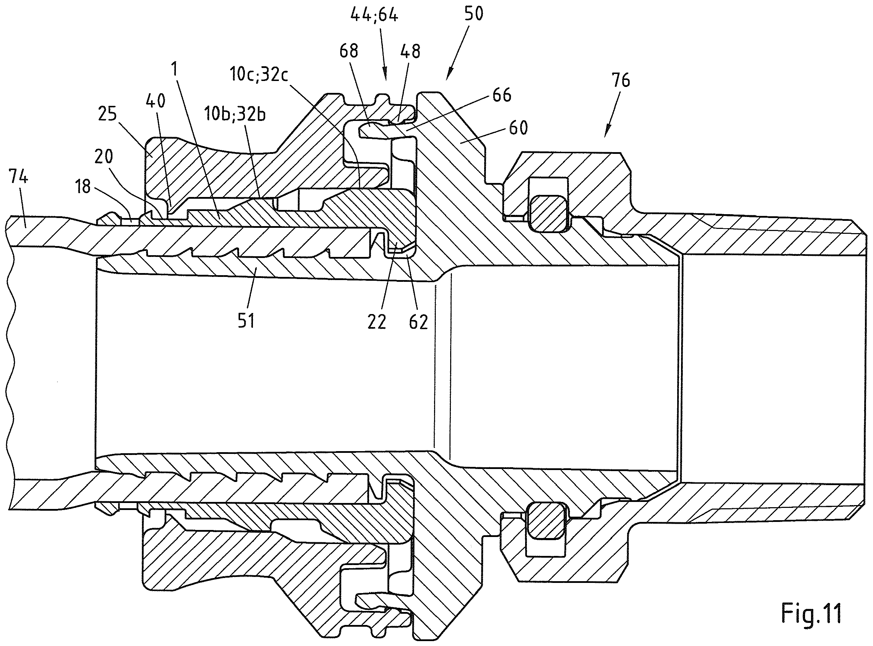

Fig. 11 zeigt die Anordnung in der Ansicht von Fig. 9 im verpressten Zustand. Durch das Verpressen ist die Schiebehülse 25 so weit auf den Klemmring 1 geschoben, dass die zylinderförmigen Abschnitte 10a, 10b, 10c; 32a, 32b, 32c in Kontakt stehen. Die zylinderförmigen Abschnitte 10a, 10b, 10c; 32a, 32b, 32c halten die während des Verpressens entstandene Presskraft im verpressten Zustand und sichern damit die Aufformung des Rohrs 74 auf dem Fitting 50.

Die entstandene Verjüngung des Klemmrings 1 bewirkt ein radiales Einschieben des Rastvorsprungs 22 in die Rastvertiefung 62 am Fitting 50. Die Kombination aus Rastvorsprung 22 und Rastvertiefung 62 hält den Klemmring 1 auf dem Fitting 50.

Der Haltevorsprung 40 greift nach dem Verpressen in die Rastvertiefung 20 am Klemmring 1 und sichert somit die Schiebehülse 25 auf dem Klemmring 1. Der Wulst 68 des Mittels zur Fixierung 44 am Grundkörper 60 des Fittings 50 schiebt sich während des Verpressens durch Einfedern der Lasche 66 über den Wulst 48 des Mittels zur Fixierung 44 an der Schiebehülse 25. Nach dem Verpressen sind die Mittel zur Fixierung 44; 64 durch die hintereinander liegenden Wülse 48; 68 verbunden und halten die Schiebehülse 25 in dieser Position auf dem Fitting 50.

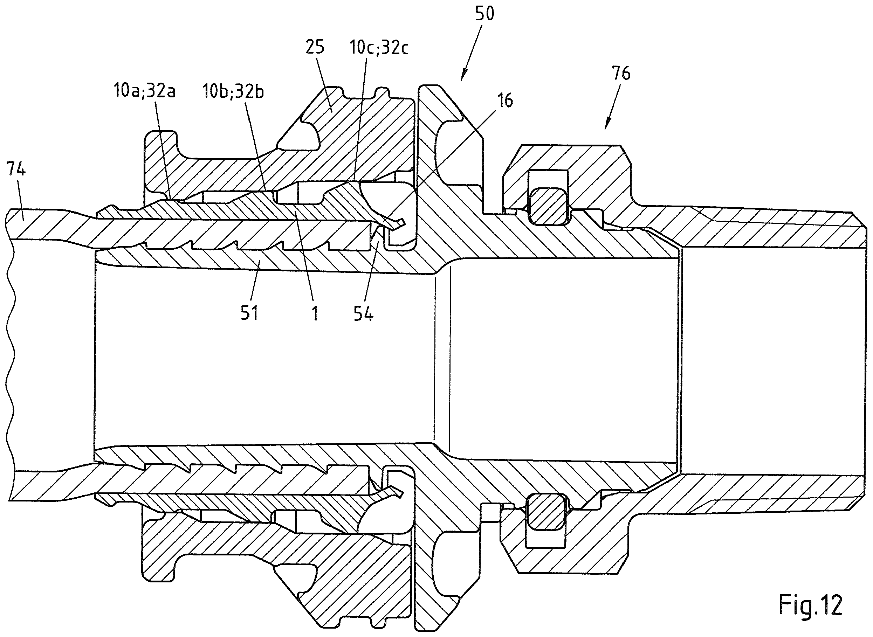

Fig. 12 zeigt die Anordnung in der Ansicht von Fig. 10 im verpressten Zustand. Die Positionierhilfe 16 hat sich beim Verpressen über den Flansch 54 geschoben.

## Patentansprüche

1. Anordnung zur Herstellung einer unlösbaren Werkstückverbindung,
- mit einem Fitting (50),
- mit einem Klemmring (1),
- mit einer Schiebehülse (25),
- wobei der Fitting (50) einen profilierten Stützkörper (51) aufweist,
- wobei der Klemmring (1) eine Innenumfangsfläche (2) und eine Außenumfangsfläche (4) sowie ein proximales Ende (14) und ein distales Ende (12) aufweist,
- wobei die Innenumfangsfläche (2) des Klemmrings (1) zumindest abschnittsweise zylindrisch ausgebildet ist
- wobei die Schiebehülse (25) eine Innenumfangsfläche (26) und eine Außenumfangsfläche (42) sowie ein proximales Ende (36) und ein distales Ende (34) aufweist,
- wobei an der Außenumfangsfläche (4) des Klemmrings (1) und an der Innenumfangsfläche (26) der Schiebehülse (25) jeweils mindestens zwei axial voneinander beabstandete Übertragungsbereiche (6a, 6b, 6c; 28a, 28b, 28c) angeordnet sind,
- wobei jeder Übertragungsbereich (6a, 6b, 6c) des Klemmrings (1) einem Übertragungsbereich (28a, 28b, 28c) der Schiebehülse (25) zugeordnet ist,
- dass die Übertragungsbereiche (6a, 6b, 6c; 28a, 28b, 28c) von Klemmring (1) und Schiebehülse (25) kegelsegmentförmige Abschnitte (8a, 8b, 8c; 30a, 30b, 30c) aufweisen
- wobei die Übertragungsbereiche (6a, 6b, 6c; 28a, 28b, 28c) des Klemmrings (1) und der Schiebehülse (25) zylindrische Abschnitte (10a, 10b, 10c; 32a, 32b, 32c) aufweisen,
- wobei durch die Verteilung der Übertragungsbereiche (6a, 6b, 6c; 28a, 28b, 28c) bei dem axialen Aufschieben der Schiebehülse (25) über die axiale Länge des Klemmrings (1) abschnittsweise eine Presskraft ausgeübt werden kann und
- wobei die zylindrischen Abschnitte (10a, 10b, 10c; 32a, 32b, 32c) in der fertigen Verbindung die Kontaktflächen zwischen dem Klemmring (1) und der Schiebehülse (25) darstellen und einen radialen Pressdruck nach einem Aufschieben halten können.

2. Anordnung nach Anspruch 1,
**dadurch gekennzeichnet,**
**dass** wenigstens zwei der kegelsegmentförmigen Abschnitte (8a, 8b, 8c; 30a, 30b, 30c) an Klemmring (1) und Schiebehülse (25) den gleichen Kegelöffnungswinkel und die gleiche axiale Länge aufweisen.

3. Anordnung nach Anspruch 1 oder 2,
**dadurch gekennzeichnet,**
- **dass** am Klemmring (1) der jeweilige Durchmesser der einzelnen zylindrischen Abschnitte (10a, 10b, 10c) vom distalen Ende (12) zum proximalen Ende (14) zunimmt und
- **dass** an der Schiebehülse (25) der jeweilige minimale Durchmesser der einzelnen zylindrischen Abschnitte (32a, 32b, 32c) vom distalen Ende (34) zum proximalen Ende (36) zunimmt.

4. Anordnung nach einem der Ansprüche 1 bis 3,
**dadurch gekennzeichnet,**
**dass** die kegelsegmentförmigen Abschnitte (8a, 8b, 8c; 30a, 30b, 30c) an Klemmring (1) und Schiebehülse (25) ringförmig umlaufend ausgebildet sind oder dass mehrere kegelsegmentförmige Abschnitte (8a, 8b, 8c; 30a, 30b, 30c) an Klemmring (1) und Schiebehülse (25) auf einer ringförmig umlaufenden Trajektorie angeordnet sind.

5. Anordnung nach einem der Ansprüche 1 bis 4,
**dadurch gekennzeichnet,**
**dass** die kegelsegmentförmigen Abschnitte (8a, 8b, 8c; 30a, 30b, 30c) an Klemmring (1) und Schiebehülse (25) in regelmäßigen axialen Abständen angeordnet sind.

6. Anordnung nach einem der Ansprüche 1 bis 5,
**dadurch gekennzeichnet,**
**dass** der Klemmring zumindest über einen Teil der Länge in axialer Richtung einen Schlitz (24) aufweist.

7. Verfahren zur Herstellung einer unlösbaren Werkstückverbindung zwischen einem Fitting (50), einem Rohr (74), einem Klemmring (1) und einer Schiebehülse (25),
- wobei der Fitting (50) einen profilierten Stützkörper (51) aufweist und
- wobei der Klemmring (1) auf dem Fitting (50) angeordnet ist,
- bei dem das Rohr (74) zwischen den Klemmring (1) und den Stützkörper (51) des Fittings (50) eingeführt wird,
- bei dem an der Außenumfangsfläche (4) des Klemmrings (1) und an der Innenumfangsfläche (26) der Schiebehülse (25) jeweils mindestens zwei einander zugeordnete, axial voneinander beabstandete Übertragungsbereiche (6a, 6b, 6c; 28a, 28b, 28c) mit kegelsegmentförmigen Abschnitten (8a, 8b, 8c; 30a, 30b, 30c) und mit zylindrischen Abschnitten (10a, 10b, 10c; 32a, 32b, 32c) in Kontakt gebracht werden und
- bei dem bei einem axialen Aufschieben der Schiebehülse (25) auf den Klemmring (1) durch die Übertragungsbereiche (6a, 6b, 6c; 28a, 28b, 28c) ein radial einwärts gerichteter Pressdruck auf das Rohr (74) gegen den Stützkörper (51) ausgeübt wird,
- wobei durch die Verteilung der Übertragungsbereiche (6a, 6b, 6c; 28a, 28b, 28c) bei dem axialen Aufschieben der Schiebehülse (25) über die axiale Länge des Klemmrings (1) abschnittsweise eine Presskraft ausgeübt wird, und
- wobei die zylindrischen Abschnitte (10a, 10b, 10c; 32a, 32b, 32c) in der fertigen Verbindung die Kontaktflächen zwischen dem Klemmring (1) und der Schiebehülse (25) darstellen und einen radialen Pressdruck nach einem Aufschieben halten.

8. Verfahren nach Anspruch 7,
**dadurch gekennzeichnet,**
**dass** bei dem axialen Aufschieben durch mehrere Übertragungsbereiche (6a, 6b, 6c; 28a, 28b, 28c) annähernd jeweils die gleiche radiale Verstellung des Rohrs (74) erzeugt wird.

## Claims

1. Arrangement for producing a non-releasable workpiece connection,
- having a fitting (50),
- having a clamping ring (1),
- having a sliding sleeve (25),
- wherein the fitting (50) has a profiled support body (51),
- wherein the clamping ring (1) has an inner circumferential surface (2) and an outer circumferential surface (4) as well as a proximal end (14) and a distal end (12),
- wherein the inner circumferential surface (2) of the clamping ring (1) is formed cylindrical at least in sections,
- wherein the sliding sleeve (25) has an inner circumferential surface (26) and an outer circumferential surface (42) as well as a proximal end (36) and a distal end (34),
- wherein at least two transmission regions (6a, 6b, 6c; 28a, 28b, 28c) which are spaced apart from each other in an axial direction are arranged on the outer circumferential surface (4) of the clamping ring (1) and on the inner circumferential surface (26) of the sliding sleeve (25) respectively,
- wherein each transmission region (6a, 6b, 6c) of the clamping ring (1) is allocated to a transmission region (28a, 28b, 28c) of the sliding sleeve (25),
- the transmission regions (6a, 6b, 6c; 28a, 28b, 28c) of the clamping ring (1) and the sliding sleeve (25) have cone segment-shaped portions (8a, 8b, 8c,; 30a, 30b, 30c),
- wherein the transmission regions (6a, 6b, 6c; 28a, 28b, 28c) of the clamping ring (1) and the sliding sleeve (25) have cylindrical portions (10a, 10b, 10c; 32a, 32b, 32c),
- wherein due to the distribution of the transmission regions (6a, 6b, 6c; 28a, 28b, 28c), during the axial sliding of the sliding sleeve (25) a pressing force can be exerted in sections over the axial length of the clamping ring (1), and
- wherein the cylindrical portions (10a, 10b, 10c; 32a, 32b, 32c) represent the contact surfaces between the clamping ring (1) and the sliding sleeve (25) in the completed connection and can maintain a radial pressing force after a sliding.

2. Arrangement according to claim 1,
**characterised in that**
at least two of the cone segment-shaped portions (8a, 8b, 8c; 30a, 30b, 30c) at the clamping ring (1) and at the sliding sleeve (25) have the same cone opening angle and the same axial length.

3. Arrangement according to claim 1 or 2,
**characterised in that**
- the respective diameter of the individual cylindrical portions (10a, 10b, 10c) at the clamping ring (1) increases from the distal end (12) to the proximal end (14) and
- the respective minimum diameter of the individual cylindrical portions (32a, 32b, 32c) at the sliding sleeve (25) increases from the distal end (34) to the proximal end (36).

4. Arrangement according to any one of claims 1 to 3,
**characterised in that**
the cone segment-shaped portions (8a, 8b, 8c; 30a, 30b, 30c) at the clamping ring (1) and at the sliding sleeve (25) are formed ring shaped in circumference or several cone segment-shaped portions (8a, 8b, 8c; 30a, 30b, 30c) at the clamping ring (1) and at the sliding sleeve (25) are arranged on a trajectory which is ring shaped in circumference.

5. Arrangement according to any one of claims 1 to 4,
**characterised in that**
the cone segment-shaped portions (8a, 8b, 8c; 30a, 30b, 30c) at the clamping ring (1) and at the sliding sleeve (25) are arranged at regular axial distances.

6. Arrangement according to any one of claims 1 to 5,
**characterised in that**
the clamping ring has a slot (24) at least over a part of the length in the axial direction.

7. Method for producing a non-releasable workpiece connection between a fitting (50), a pipe (74), a clamping ring (1) and a sliding sleeve (25),
- wherein the fitting (50) has a profiled support body (51) and
- wherein the clamping ring (1) is arranged on the fitting (50),
- in which the pipe (74) is introduced between the clamping ring (1) and the support body (51) of the fitting (50),
- in which at least two transmission regions (6a, 6b, 6c; 28a, 28b, 28c) which are allocated to each other and spaced apart from each other in an axial direction are brought into contact with cone segment-shaped portions (8a, 8b, 8c; 30a, 30b, 30c) and with cylindrical portions (10a, 10b, 10c; 32a, 32b, 32c) on the outer circumferential surface (4) of the clamping ring (1) and on the inner circumferential surface (26) of the sliding sleeve (25) respectively and
- in which a pressing force directed radially inwards is exerted on the pipe (74) against the support body (51) by the transmission regions (6a, 6b, 6c; 28a, 28b, 28c) during an axial sliding of the sliding sleeve (25) onto the clamping ring (1),
- wherein due to the distribution of the transmission regions (6a, 6b, 6c; 28a, 28b, 28c), during the axial sliding of the sliding sleeve (25) a pressing force is exerted in sections over the axial length of the clamping ring (1), and
- wherein the cylindrical portions (10a, 10b, 10c; 32a, 32b, 32c) represent the contact surfaces between the clamping ring (1) and the sliding sleeve (25) in the completed connection and maintain a radial pressing force after a sliding.

8. Method according to claim 7,
**characterised in that**
approximately the same radial displacement of the pipe (74) is generated by several transmission regions (6a, 6b, 6c; 28a, 28b, 28c) during the axial sliding, respectively.

## Revendications

1. Ensemble pour la réalisation d'une liaison de pièces non détachable,
- avec une ferrure (50),
- avec une bague de serrage (1),
- avec une douille coulissante (25),
- sachant que la ferrure (50) est dotée d'un corps d'appui (51) profilé,
- sachant que la bague de serrage (1) est dotée d'une face circonférentielle intérieure (2) et d'une face circonférentielle extérieure (4) ainsi que d'une extrémité proximale (14) et d'une extrémité distale (12),
- sachant que la face circonférentielle intérieure (2) de la bague de serrage (1) est, au moins par sections, de forme cylindrique,
- sachant que la douille coulissante (25) est dotée d'une face circonférentielle intérieure (26) et d'une face circonférentielle extérieure (42) ainsi que d'une extrémité proximale (36) et d'une extrémité distale (34),
- sachant que, sur la face circonférentielle extérieure (4) de la bague de serrage (1) et sur la face circonférentielle intérieure (26) de la douille coulissante (25), sont respectivement disposés au moins deux sections de transmission (6a, 6b, 6c ; 28a, 28b, 28c) distancées axialement les unes des autres,
- sachant qu'à chacune des sections de transmission (6a, 6b, 6c) de la bague de serrage (1) est associée une section de transmission (28a, 28b, 28c) de la douille coulissante (25),
- les sections de transmission (6a, 6b, 6c ; 28a, 28b, 28c) de la bague de serrage (1) et de la douille coulissante (25) étant dotées de sections en forme de segments de cône (8a, 8b, 8c ; 30a, 30b, 30c),
- sachant que les sections de transmission (6a, 6b, 6c ; 28a, 28b, 28c) de la bague de serrage (1) et de la douille coulissante (25) étant dotées de sections cylindriques (10a, 10b, 10c, 32a, 32b, 32c),
- sachant que, par la répartition des sections de transmission (6a, 6b, 6c ; 28a, 28b, 28c), lors du déplacement axial de la douille coulissante (25), sur la longueur de la bague de serrage (1), une force de pression peut être exercée par sections, et
- sachant que les sections cylindriques (10a, 10b, 10c, 32a, 32b, 32c) représentent, dans la liaison finie, les surfaces de contact entre la bague de serrage (1) et la douille coulissante (25) et peuvent maintenir une pression radiale après un déplacement.

2. Ensemble selon la revendication 1,
**caractérisé en ce que** au moins deux des sections en forme de segments de cône (8a, 8b, 8c ; 30a, 30b, 30c) au moins présentent le même angle d'ouverture conique et la même longueur axiale sur la bague de serrage (1) et sur la douille coulissante (25).

3. Ensemble selon revendication 1 ou 2,
**caractérisé en ce que**
- sur la bague de serrage (1), le diamètre respectif des sections cylindriques (10a, 10b, 10c augmente de l'extrémité distale (12) à l'extrémité proximale (14), et
- que, sur la douille coulissante (25) le diamètre minimal respectif des différentes sections cylindriques (32a, 32b, 32c) augmente de l'extrémité distale (34)) à l'extrémité proximale (36).

4. Ensemble selon l'une des revendications 1 à 3,
**caractérisé en ce que** les sections en forme de segments de cône (8a, 8b, 8c ; 30a, 30b, 30c) sont disposées en forme d'anneau sur la bague de serrage (1) et la douille coulissante (25) ou que plusieurs sections en forme de segments de cône (8a, 8b, 8c ; 30a, 30b, 30c) sont disposées sur la bague de serrage (1) et la douille coulissante (25) sur une trajectoire périphérique, en forme d'anneau.

5. Ensemble selon l'une des revendications 1 à 4,
**caractérisé en ce que** les sections en forme de segments de cône (8a, 8b, 8c; 30a, 30b, 30c) sont disposées sur la bague de serrage (1) et la douille coulissante (25) à intervalles axiaux, réguliers.

6. Ensemble selon l'une des revendications 1 à 5,
**caractérisé en ce que** la bague de serrage est dotée d'une fente (24), s'étendant au moins sur une partie de sa longueur dans la direction axiale.

7. Procédé de réalisation d'une liaison de pièces non détachable entre une ferrure (50), un tube (74), une bague de serrage (1) et une douille coulissante (25),
- sachant que la ferrure (50) est doté d'un corps d'appui profilé (51) et
- sachant que la bague de serrage (1) est disposée sur la ferrure (50),
procédé
- dans lequel, le tube (74) est inséré entre la bague de serrage (1) et le corps d'appui (51) de la ferrure (50),
- dans lequel, sur la face circonférentielle extérieure (4) de la bague de serrage (1) et sur la face circonférentielle intérieure (26) de la douille coulissante (25), au moins deux sections de transmission (6a, 6b, 6c ; 28a, 28b, 28c), dotées de sections en forme de segments de cône (8a, 8b, 8c ; 30a, 30b, 30c) et de sections cylindriques (10a, 10b, 10c, 32a, 32b, 32c), associées les unes aux autres et distancées axialement les unes des autres, sont respectivement mises en contact, et
- dans lequel, lors d'un déplacement axial de la douille coulissante (25) sur la bague de serrage (1), une pression, orientée radialement, est exercée sur le tube (74) contre le corps d'appui (51), par les sections de transmission (6a, 6b, 6c ; 28a, 28b, 28c),
- sachant que, par la répartition des sections de transmission (6a, 6b, 6c ; 28a, 28b, 28c), lors du déplacement axial de la douille coulissante (25), sur la longueur axiale de la bague de serrage (1), une force de pression peut être exercée par sections, et
- sachant que les sections cylindriques (10a, 10b, 10c, 32a, 32b, 32c) représentent, dans la liaison finie, les surfaces de contact entre la bague de serrage (1) et la douille coulissante (25) et peuvent maintenir une pression radiale après un déplacement.

8. Procédé selon la revendication 7,
**caractérisé en ce que,** lors du déplacement axial, par plusieurs sections de transmission (6a, 6b, 6c ; 28a, 28b, 28c), un déplacement radial du tube (74) approximativement semblable est respectivement généré.
